# EUROPÄISCHE PATENTSCHRIFT

(11) **EP 3 128 186 B1**
(45) Veröffentlichungstag und Bekanntmachung des Hinweises auf die Patenterteilung: **24.02.2021**
(21) Anmeldenummer: 16001582.2
(22) Anmeldetag: 15.07.2016
(51) Int. Cl.: F15B 21/04, B60T 17/00

(54) **BETRIEBSVERFAHREN FÜR EINE DRUCKLUFTAUFBEREITUNGSEINRICHTUNG FÜR EIN NUTZFAHRZEUG**
OPERATING METHOD FOR A COMPRESSED AIR SUPPLY DEVICE FOR A COMMERCIAL VEHICLE
PROCEDE DE FONCTIONNEMENT D'UN DISPOSITIF DE TRAITEMENT D'AIR COMPRIME POUR VEHICULE UTILITAIRE

(30) Priorität: 06.08.2015 DE 102015010347
(43) Veröffentlichungstag der Anmeldung: 08.02.2017
(73) Patentinhaber: MAN Truck & Bus SE, 80995 München (DE)
(72) Erfinder: Kaupert, Oliver, 80995 München (DE); Hofstetter, Thomas, 84048 Mainburg (DE)
(74) Vertreter: v. Bezold & Partner Patentanwälte - PartG mbB

(56) Entgegenhaltungen:
- EP-A1- 2 933 503
- WO-A1-2008/095702
- DE-A1-102007 013 673
- DE-A1-102008 017 361

## Beschreibung

Die Erfindung betrifft ein Betriebsverfahren für eine insbesondere elektronische Druckluftaufbereitungseinrichtung für ein Nutzfahrzeug, z. B. einen Lastkraftwagen oder einen Omnibus. Die Erfindung betrifft zudem eine Druckluftaufbereitungseinrichtung, die zum Ausführen des Betriebsverfahrens konfiguriert ist.

In Nutzfahrzeugen mit pneumatischem Druckluftsystem sind heute typischerweise Luftpresser installiert, die in irgendeiner Weise vom Förderbetrieb (Arbeitsbetrieb) in einen Energiesparbetrieb (Leerlaufbetrieb) mit reduzierter Förderleistung und dementsprechend reduzierter Leistungsaufnahme schaltbar sind. Die maximale Reduktion geschieht durch Betätigen einer Kupplung zwischen Motorabtrieb und Luftpresser. Eine teilweise Reduktion geschieht durch Betätigung eines Ventils im Luftpresser-Zylinderkopf, wodurch Ansaug- und Verdichtungsraum miteinander verbunden werden und dementsprechend eine stark reduzierte Verdichtung und Luftförderung stattfindet. Die Betätigung des Ventils geschieht üblicherweise über ein pneumatisches Steuersignal oder den Druck in einer Druckluft-führenden Förderleitung. Für letzteren Fall muss, um in den Energiesparmodus zu kommen, von einem nachfolgenden Lufttrockner oder einer elektronischen Luftaufbereitungseinheit ein Ablassventil geöffnet und damit die Förderleitung entlüftet werden. Ein Rückschlagventil stromabwärts des Ablassventils sichert den Druck in der Druckluftanlage. Typischerweise geschieht der Abschaltvorgang, wenn in der Druckluftanlage der maximal zulässige Systemdruck erreicht ist. Bei einem Druck in der Förderleitung unter z. B. üblicherweise ca. 2 bar schaltet das Ventil im Luftpresser-Zylinderkopf, wodurch Ansaug- und Verdichtungsraum miteinander verbunden werden. Der Luftpresser ist im Energiesparmodus, die reduzierte Fördermenge wird über das Ablassventil ins Freie entlüftet. Fällt nun allerdings der Systemdruck unter einen definierten Mindestdruck, muss das Ablassventil geschlossen werden. Damit steigt der Druck in der Förderleitung langsam wieder an. Es müssen üblicherweise ca. 2 Liter Volumen befüllt werden, nämlich die Förderleitung zwischen Luftpresser und Luftaufbereitungseinheit sowie eine Trockenmittelpatrone der Luftaufbereitungseinheit. Zu Beginn fördert der Luftpresser nur die reduzierte Luftmenge und erst oberhalb ca. 2 bar in der Förderleitung wieder die volle Luftmenge, wenn das Ventil im Luftpresser-Zylinderkopf die Verbindung zwischen Ansaug- und Verdichtungsraum schließt. Erst wenn der Druck in der Förderleitung über den aktuellen Systemdruck angestiegen ist, wird wieder Luft ins Druckluftsystem gefördert. Insbesondere wenn man Schubphasen (z. B. Bergabfahrt) ausnutzen will, vergeht durch die zunächst reduzierte Luftfördermenge relativ viel Zeit, bis man die verfügbare Energie im Druckluftsystem gespeichert hat. Bei kurzen Schubphasen kann es passieren, dass der Druck in der Förderleitung noch nicht über dem Systemdruck ist und somit quasi "ungesichert" über das Ablassventil wieder entlüftet wird und die Energie nicht gespeichert werden kann.

Die DE 10 2007 013673 A1 betrifft eine Druckluftversorgungseinrichtung für ein Nutzfahrzeug mit einem mit einem Kompressor koppelbaren Drucklufteingang, einer mit dem Drucklufteingang über eine Förderleitung gekoppelten Filtereinheit, einer mit einem Ablassausgang und der Förderleitung gekoppelten Ablassventileinrichtung, einem mit einem Steuereingang des Kompressors koppelbaren Energiesparsteuerausgang, einer zwischen dem Kompressor und der Filtereinheit angeordneten Förderleitungsabsperrventileinrichtung und einer ersten Ventileinrichtung sowie einer zweiten Ventileinrichtung.

Die DE 10 2008 017361 A1 offenbart eine Druckluftversorgungseinrichtung zur Steuerung der Regeneration eines Luftfilters.

Die EP 2 933 503 A1 offenbart ein Betriebsverfahren für eine zweckmäßig elektronische Druckluftaufbereitungseinrichtung zum Verbinden einerseits mit einer mittels Druckluft aus der Druckluftaufbereitungseinrichtung selbsttätig in einen Leerlaufzustand schaltbaren Luftkompressoreinrichtung und andererseits mit einem Druckluftsystem.

Die WO 2008/095702 A1 offenbart eine Druckluftversorgungsanlage für ein Nutzfahrzeug, mit einer Lufttrocknereinheit mit einer Filtereinheit, einer elektrisch ansteuerbaren Ventileinheit und einer pneumatisch ansteuerbaren Ablassventileinheit, einem Kompressor mit Kupplung, welcher der Lufttrocknereinheit Druckluft über eine Förderleitung liefert, einer Mehrkreisschutzventileinheit, die Druckluft von der Lufttrocknereinheit bezieht, und einer elektrisch ansteuerbaren Kompressorkupplungsschaltventileinheit. Es ist eine elektronische Steuereinheit vorgesehen, die Funktionen der Lufttrocknereinheit und der Kompressorkupplungsschaltventileinheit steuert beziehungsweise regelt.

Eine Aufgabe der Erfindung ist es, ein Betriebsverfahren für eine zweckmäßig elektronische Druckluftaufbereitungseinrichtung für ein Nutzfahrzeug zu schaffen, mittels dessen insbesondere auch kurze Schubphasen zur Energiegewinnung oder Energiewandlung ausgenutzt werden können, insbesondere mittels dessen aus einer Leerlauf-/Energiesparphase heraus der Druck in einer Förderleitung schneller aufgebaut werden kann, z. B. über einen Grenzdruck von vorzugsweise ca. 2 bar.

Diese Aufgabe kann mit den Merkmalen des Hauptanspruchs gelöst werden. Vorteilhafte Weiterbildungen der Erfindung können den Unteransprüchen und der nachfolgenden Beschreibung entnommen werden.

Die Erfindung schafft ein Betriebsverfahren für eine insbesondere elektronische Druckluftaufbereitungseinrichtung zum Verbinden mit einer mittels Druckluft aus der Druckluftaufbereitungseinrichtung selbsttätig in einen Leerlaufzustand schaltbaren Luftkompressoreinrichtung (z. B. Kompressor mit sogenanntem selbsttätigen Leerlaufsystem (SLS)) und mit einem Druckluftsystem.

Die Druckluftaufbereitungseinrichtung umfasst eine mit der Luftkompressoreinrichtung verbindbare Fördereinrichtung (z. B. eine Förderleitung), ein erstes Ventil, ein zweites Ventil, ein drittes Ventil und ein viertes Ventil.

Aus einer Leerlaufphase (z. B. Energiesparphase) heraus hin zu einer Förderphase (z. B. Arbeitsphase) werden das erste Ventil und das dritte Ventil in einen gesperrten Zustand geschaltet und das zweite Ventil in einen geöffneten Zustand geschaltet. Dadurch kann Luft aus dem Druckluftsystem über das zweite Ventil und unter Umgehung des vierten Ventils zurück zur Fördereinrichtung geführt werden, um insbesondere den Luftdruck in der Fördereinrichtung aus der Leerlaufphase heraus ausgehend von einer drucklosen Fördereinrichtung aufbauen zu können. Dadurch kann Energie aus Schubphasen (z .B. Bergabfahrt), insbesondere selbst kurzen Schubphasen von z. B. unter 30 Sekunden, unter 15 Sekunden oder sogar unter 5 Sekunden, in Druckluft gewandelt und im Druckluftsystem gespeichert werden.

Es ist möglich, dass das zweite Ventil aus der Leerlaufphase heraus von einem gesperrten Zustand in einen geöffneten Zustand geschaltet wird und (z. B. immer und erst) wieder in einen gesperrten Zustand, wenn z. B. mittels eines Drucksensors ein Druckanstieg in einem Leitungsabschnitt zwischen dem zweiten Ventil und dem Druckluftsystem erfasst wird. Problematisch dabei ist, dass insbesondere wenn während der Betätigung des zweiten Ventils ("geöffneter Zustand") ein Fehlerfall eintritt (z. B. eine Systemleckage, Abriss einer Förderleitung und/oder Steckenbleiben des dritten Ventils in geöffnetem Zustand, etc.), es nicht zu einem Druckanstieg kommen würde. Hingegen würde die Funktion des vierten Ventils umgangen und der Druck im Druckluftsystem permanent fallen bis zum Schließdruck der jeweiligen Kreise, was insbesondere zu einer Stop-Meldung führen würde. Die Wahrscheinlichkeit, dass ein solcher Fehlerfall eintritt, insbesondere während der Betätigung des zweiten Ventils, ist zwar gering, dennoch ist ein solcher Fehlerfall möglich.

Das zweite Ventil kann deshalb in einen gesperrten Zustand geschaltet werden, wenn ein vordefiniertes Zeitlimit (z. B. zwischen 10 bis 30 Sekunden) verstrichen ist und/oder ein Systemdruck (zweckmäßig Luftdruck) zwischen dem zweiten Ventil und dem Druckluftsystem unter ein vordefiniertes Drucklimit sinkt. Dadurch kann insbesondere das zweite Ventil in einen gesperrten Zustand versetzt werden, auch wenn kein Druckanstieg zwischen dem zweiten Ventil und dem Druckluftsystem gemessen wird.

Das Zeitlimit kann z. B. maximal 10, maximal 15, maximal 20, maximal 25 oder maximal 30 Sekunden betragen, so dass zweckmäßig nach Ablauf von z. B. maximal 10, maximal 15, maximal 20, maximal 25 oder maximal 30 Sekunden das zweite Ventil in einen gesperrten Zustand geschaltet wird.

Das Zeitlimit beginnt vorzugsweise zu laufen, wenn das zweite Ventil in einen geöffneten Zustand geschalten wird

Das vordefinierte Drucklimit kann z. B. mindestens 6bar, mindestens 7bar oder mindestens 8bar betragen, so dass zweckmäßig nach einem Druckabfall unter mindestens 5bar, mindestens 6bar, mindestens 7bar oder mindestens 8bar das zweite Ventil in einen gesperrten Zustand geschaltet wird.

Es ist möglich, dass sich das Zeitlimit längstens bis zu dem Zeitpunkt erstreckt, wenn der Systemdruck, vorzugsweise zwischen dem zweiten Ventil und dem Druckluftsystem, auf mindestens 5bar, mindestens 6bar, mindestens 7bar oder mindestens 8bar sinkt.

Es ist möglich, dass das zweite Ventil aus der Leerlaufphase heraus von einem gesperrten Zustand in einen geöffneten Zustand geschaltet wird und wieder in einen gesperrten Zustand geschaltet wird, wenn das vordefinierte Zeitlimit verstrichen ist und/oder der Systemdruck, vorzugsweise zwischen dem zweiten Ventil und dem Druckluftsystem, unter das vordefinierte Drucklimit sinkt.

Der Systemdruck zwischen dem zweiten Ventil und dem Druckluftsystem wird zweckmäßig durch einen Drucksensor erfasst, insbesondere im Leitungsabschnitt zwischen dem zweiten Ventil und dem Druckluftsystem.

Es ist möglich, dass aus der Leerlaufphase heraus die Luft aus dem Druckluftsystem über eine Verbindungsleitung in einen Leitungsabschnitt der Druckluftaufbereitungseinrichtung zwischen dem vierten Ventil und einer Luft-Aufbereitungs- oder Luft-Trocknungseinrichtung geführt wird und über die Luft-Aufbereitungs- oder Luft-Trocknungseinrichtung zurück zur Fördereinrichtung geführt wird.

Die Verbindungsleitung zweigt vorzugsweise von einem das zweite Ventil mit dem dritten Ventil verbindenden Leitungsabschnitt ab und mündet zwischen dem vierten Ventil und der Luft-Aufbereitungs- oder Luft-Trocknungseinrichtung.

Die Verbindungsleitung kann ein Drosselventil aufweisen, das ein fünftes Ventil der Druckluftaufbereitungseinrichtung darstellt.

Das erste Ventil und/oder das zweite Ventil ist ein vorzugsweise elektrisch schaltbares Schaltventil, vorzugsweise ein Magnetventil.

Es ist möglich, dass Luft aus dem Druckluftsystem über das erste Ventil auf das dritte Ventil wirkt, wenn das erste Ventil geöffnet ist, um das dritte Ventil zu schalten. Das dritte Ventil steht zweckmäßig über einen Leitungsabschnitt mit dem ersten Ventil in Verbindung, um mittels Druckluft aus dem Druckluftsystem und/oder aus dem ersten Ventil geschaltet zu werden.

Ferner kann Luft aus dem Druckluftsystem über das zweite Ventil auf das dritte Ventil wirken, wenn das zweite Ventil geöffnet ist, um das dritte Ventil zu schalten. Das dritte Ventil steht zweckmäßig über einen Leitungsabschnitt mit dem zweiten Ventil in Verbindung, um mittels Druckluft aus dem Druckluftsystem und/oder aus dem zweiten Ventil geschaltet zu werden.

Das dritte Ventil ist folglich zweckmäßig sowohl über das erste Ventil als auch über das zweite Ventil mittels Druckluft aus dem Druckluftsystem ansteuerbar.

Das dritte Ventil ist vorzugsweise ein Luft-Ablassventil zum wahlweisen Sperren oder Ausgeben von Luft aus der Fördereinrichtung und/oder ein Druckluft-schaltbares Ventil, insbesondere Druckluft-schaltbar über Luft aus dem ersten Ventil und dem zweiten Ventil.

Das vierte Ventil ist hingegen vorzugsweise ein Rückschlagventil.

Das vierte Ventil kann z. B. eine Durchfuhr von Luft aus der Fördereinrichtung in Richtung Druckluftsystem erlauben, hingegen eine Durchfuhr von Luft aus dem Druckluftsystem in Richtung Fördereinrichtung verhindern.

Die Druckluftaufbereitungseinrichtung kann einen Drucksensor zur Erfassung des Luftdrucks zwischen dem zweiten Ventil und dem Druckluftsystem aufweisen. Das zweite Ventil kann in Abhängigkeit der mittels des Drucksensors erfassten Werte geschaltet werden.

Zu erwähnen ist, dass das Merkmal "Luft" im Rahmen der Erfindung breit zu verstehen ist und vorzugsweise auch andere Gase umfassen kann.

Zu erwähnen ist ferner, dass das Merkmal "Leerlaufphase" eine "Energiesparphase" umfassen und das Merkmal "Förderphase" eine "Arbeitsphase" umfassen kann.

Die zuvor beschriebenen bevorzugten Ausführungsformen und Merkmale der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine schematische Darstellung einer Druckluftaufbereitungseinrichtung gemäß einer Ausführungsform der Erfindung, in einem Systemzustand "Luftpresser schnell aus Leerlaufphase in Förderphase schalten",
- Figur 2: zeigt die Druckluftaufbereitungseinrichtung der Figur 1, im Systemzustand "Fördern",
- Figur 3: zeigt die Druckluftaufbereitungseinrichtung der Figuren 1 und 2, im Systemzustand "Luftpresser abschalten plus regenerieren", und
- Figur 4: zeigt die Druckluftaufbereitungseinrichtung der Figuren 1 bis 3, im Systemzustand "Luftpresser abschalten".

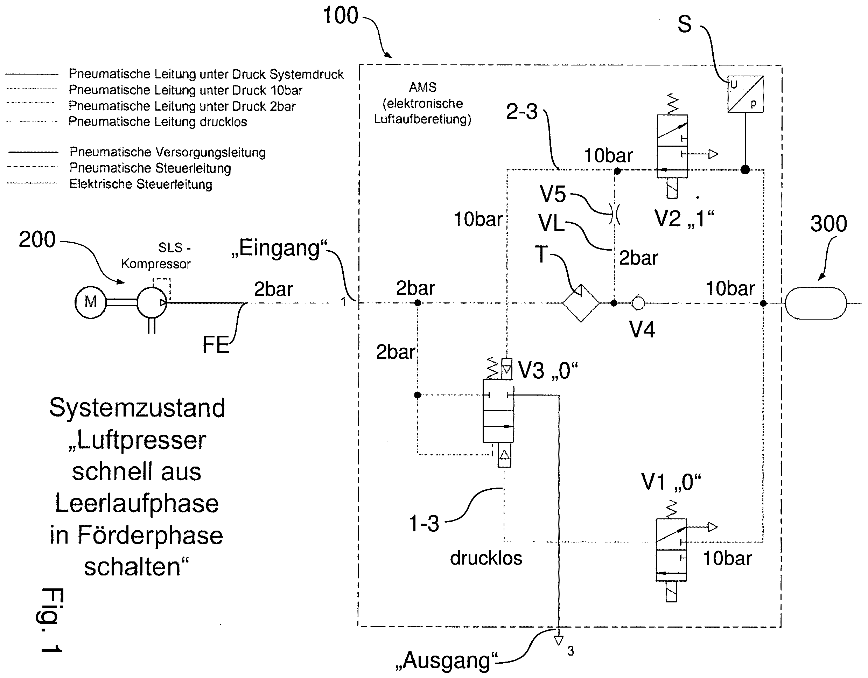

Figur 1 zeigt eine elektronische Druckluftaufbereitungseinrichtung 100 gemäß einer Ausführungsform der Erfindung. Die Druckluftaufbereitungseinrichtung 100 dient zum Verbinden einerseits mit einer mittels Druckluft aus der Druckluftaufbereitungseinrichtung 100 selbsttätig in einen Leerlaufzustand schaltbaren Luftkompressoreinrichtung 200 (z. B. Luftpresser mit sogenanntem selbsttätigen Leerlaufsystem SLS; Luftpresser kann sich selbsttätig in Leerlauf schalten) und zum Verbinden andererseits mit einem Druckluftsystem 300. Die Druckluftaufbereitungseinrichtung 100 und die Luftkompressoreinrichtung 200 sind über eine Fördereinrichtung (Förderleitung) FE miteinander verbunden. Die Fördereinrichtung FE führt über einen Eingang 1 in die Druckluftaufbereitungseinrichtung 100.

Die Druckluftaufbereitungseinrichtung 100 umfasst ein erstes Ventil V1 (elektrisch schaltbares Magnetventil), ein zweites Ventil V2 (elektrisch schaltbares Magnetventil), ein drittes Ventil V3 (Luft-Ablassventil), ein viertes Ventil V4 (Rückschlagventil) und ein fünftes Ventil V5 (Drosselventil). Das dritte Ventil V3 dient zum druckluftgesteuerten, wahlweisen Sperren oder Ausgeben von Luft aus der Fördereinrichtung FE. Die mittels des dritten Ventils V3 auszugebende Luft kann über einen Ausgang 3 aus der Druckluftaufbereitungseinrichtung 100 hinausgeführt werden.

Die Druckluftaufbereitungseinrichtung 100 umfasst eine Luft-Aufbereitungs-Einrichtung T, z. B. eine Luft-Trocknungs-Einrichtung, zur Regeneration insbesondere trockener Luft aus dem Druckluftsystem 300.

Das dritte Ventil V3 steht über einen Leitungsabschnitt 1-3 mit dem ersten Ventil V1 in Verbindung, um mittels Druckluft aus dem ersten Ventil V1 geschaltet zu werden. Luft aus dem Druckluftsystem 300 kann über das erste Ventil V1 auf das dritte Ventil V3 wirken, wenn das erste Ventil V1 geöffnet ist, um das dritte Ventil V3 zu schalten.

Das dritte Ventil V3 steht über einen Leitungsabschnitt 2-3 mit dem zweiten Ventil V2 in Verbindung, um mittels Druckluft aus dem zweiten Ventil V2 geschaltet zu werden. Luft aus dem Druckluftsystem 300 kann über das zweite Ventil V2 auf das dritte Ventil V3 wirken, wenn das zweite Ventil V2 geöffnet ist, um das dritte Ventil V3 zu schalten.

Eine Verbindungsleitung VL zweigt von dem Leitungsabschnitt 2-3 ab und mündet zwischen dem vierten Ventil V4 und der Luft-Aufbereitungs-Einrichtung T. Die Verbindungsleitung VL umfasst das fünfte Ventil V5.

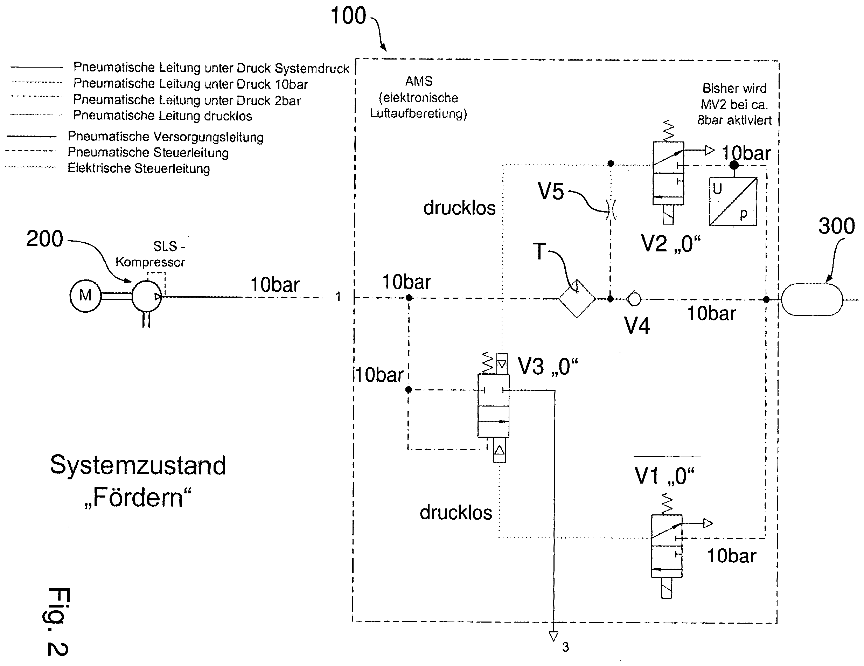

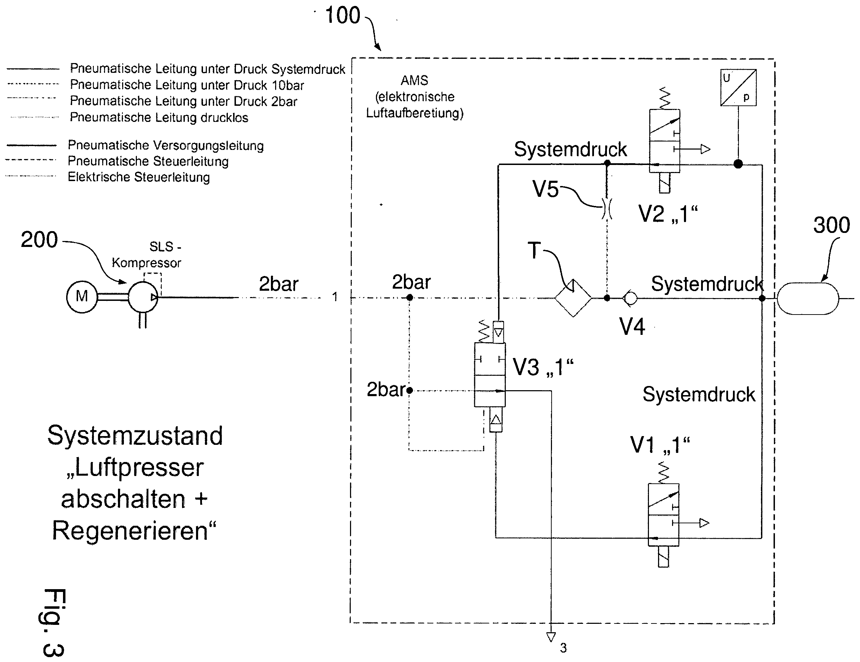

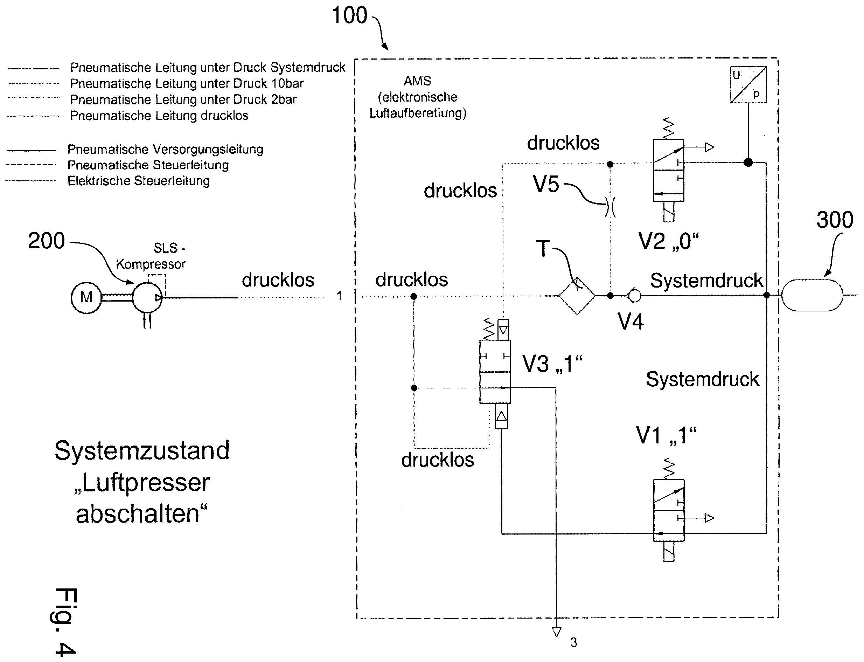

Die Betriebsweise des in Figur 1 gezeigten Systems wird nachfolgend unter Bezugnahme auf die Figuren 1 bis 4 beschrieben, wobei Figur 1 den Systemzustand "Luftpresser 200 schnell aus der Leerlaufphase in die Förderphase schalten", Figur 2 den Systemzustand "Fördern", Figur 3 den Systemzustand "Luftpresser 200 abschalten plus regenieren" und Figur 4 den Systemzustand "Luftpresser 200 abschalten" zeigt.

Ausgehend von einer Leerlauf- bzw. Energiesparphase (Figur 4) hin zu einer Förder- bzw. Arbeitsphase (Figur 2) wird das erste Ventil V1 und das dritte Ventil V3 in einen gesperrten Zustand "0" geschaltet und das zweite Ventil V2 in einen geöffneten Zustand "1" geschaltet (Figur 1), so dass Luft aus dem Druckluftsystem 300 über das zweite Ventil V2 und unter Umgehung des vierten Ventils V4 - also parallel zum vierten Ventil V4 - zurück zur Fördereinrichtung FE geführt wird, wodurch die zunächst drucklose Fördereinrichtung FE mit Druck beaufschlagt wird. Somit kann aus der Leerlaufphase heraus der Druck in der Fördereinrichtung FE schneller aufgebaut werden, um die (energiearme) Druckluftförderung während insbesondere kurzer Schubphasen des Nutzfahrzeugs besser ausnutzen zu können. Selbst Schubphasen von z. B. unter 30 s, unter 15 s oder sogar unter 5 s können energiegewinnend genutzt werden. Um trockene Luft aus dem Druckluftsystem 300 zu regenerieren, wird hingegen das zweite Ventil V2 bei geöffnetem dritten Ventil V3 geöffnet, wodurch trockene Luft aus dem Druckluftsystem 300 parallel zum vierten Ventil V4 über die Verbindungsleitung VL und das fünfte Ventil V5 durch die Luft-Aufbereitungs-Einrichtung T zur Regeneration derselben strömen kann (Figur 3).

Das System sieht also vor, Luft aus dem Druckluftsystem 300 in die Fördereinrichtung FE zurückzuspeisen. Das kann eben dadurch realisiert werden, dass bei geschlossenem dritten Ventil 3 das zweite Ventil V2 geöffnet wird, so dass Luft in die Fördereinrichtung FE strömt und der Druck schneller über einen Grenzdruck von z. B. üblicherweise ca. 2 bar steigen kann. Daraus folgt, dass die Luftkompressoreinrichtung 200 schneller wieder die volle Luftmenge fördern kann und der Druck in der Fördereinrichtung FE schneller den Systemdruck übersteigen kann. Die in einer Schubphase frei verfügbare Energie kann schneller im Druckluftsystem 300 gespeichert werden, selbst dann, wenn die Schubphase relativ kurz ist.

Das System ermöglicht folglich die Ausnutzung insbesondere kurzer Schubphasen zur Gewinnung (Rückgewinnung) frei verfügbarer Energie innerhalb der Schubphasen bzw. zur Wandlung frei verfügbarer Energie innerhalb der Schubphasen in Druckluft und anschließender Speicherung im Druckluftsystem 300. Durch Einspeisen von Druckluft aus dem Druckluftsystem 300 in die Fördereinrichtung FE kann die Luftkompressoreinrichtung 200 schneller aus einer Leerlaufphase in eine (volle) Förderphase versetzt werden.

Das zweite Ventil V2 wird aus der Leerlaufphase heraus von einem gesperrten Zustand "0" in einen geöffneten Zustand "1" geschaltet und zwar zweckmäßig immer und erst dann, wenn zwischen dem Druckluftsystem 300 und dem zweiten Ventil V2 ein Druckanstieg mittels eines Drucksensors S sensiert wird. Für einen potentiellen Fehlerfall, in dessen Folge kein Druckanstieg zwischen dem Druckluftsystem 300 und dem zweiten Ventil V2 erfolgt, wird das zweite Ventil V2 vorsorglich und/oder automatisch in einen gesperrten Zustand "0" geschaltet, wenn ein vordefiniertes Zeitlimit (z. B. zwischen 10 bis 30 Sekunden nach Öffnen des zweiten Ventils V2) verstrichen ist und/oder der Systemdruck zwischen dem zweiten Ventil V2 und dem Druckluftsystem 300 unter ein vordefiniertes Drucklimit (z. B. unter 6bar) fällt.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deswegen in den Schutzbereich fallen. Darüber hinaus beansprucht die Erfindung Schutz für den Gegenstand und die Merkmale der Unteransprüche, unabhängig von den in Bezug genommenen Merkmalen und Ansprüchen.

### Bezugszeichenliste

- 100: Druckluftaufbereitungseinrichtung
- 200: Luftkompressoreinrichtung (Luftpresser)
- 300: Druckluftsystem
- V1: Erstes Ventil
- V2: Zweites Ventil
- V3: Drittes Ventil
- V4: Viertes Ventil
- V5: Fünftes Ventil
- FE: Fördereinrichtung (Förderleitung)
- T: Luft-Aufbereitungs- oder Luft-Trocknungseinrichtung
- VL: Verbindungsleitung
- 1-3: Verbindungsleitung (erstes Ventil - drittes Ventil)
- 2-3: Verbindungsleitung (zweites Ventil - drittes Ventil)
- S: Drucksensor
- "0": Gesperrter Zustand
- "1": Geöffneter Zustand
- M: Motor

## Patentansprüche

1. Betriebsverfahren für eine vorzugsweise elektronische Druckluftaufbereitungseinrichtung (100) zum Verbinden einerseits mit einer mittels Druckluft aus der Druckluftaufbereitungseinrichtung (100) selbsttätig in einen Leerlaufzustand schaltbaren Luftkompressoreinrichtung (200) und andererseits mit einem Druckluftsystem (300), wobei die Druckluftaufbereitungseinrichtung (100) eine mit der Luftkompressoreinrichtung (200) verbindbare Fördereinrichtung (FE), ein erstes Ventil (V1), ein zweites Ventil (V2), ein drittes Ventil (V3) und ein viertes Ventil (V4) aufweist, wobei aus einer Leerlaufphase heraus hin zu einer Förderphase das erste Ventil (V1) und das dritte Ventil (V3) in einen gesperrten Zustand ("0") geschaltet werden und das zweite Ventil (V2) in einen geöffneten Zustand ("1") geschaltet wird, so dass Luft aus dem Druckluftsystem (300) über das zweite Ventil (V2) und unter Umgehung des vierten Ventils (V4) zurück zur Fördereinrichtung (FE) geführt wird, wobei das zweite Ventil (V2) in einen gesperrten Zustand ("0") geschaltet wird, wenn ein vordefiniertes Zeitlimit verstrichen ist und/oder ein Systemdruck zwischen dem zweiten Ventil (V2) und dem Druckluftsystem (300) unter ein vordefiniertes Drucklimit sinkt.

2. Betriebsverfahren nach Anspruch 1, wobei das Zeitlimit maximal 10, maximal 15, maximal 20, maximal 25 oder maximal 30 Sekunden beträgt.

3. Betriebsverfahren nach Anspruch 1 oder 2, wobei das Drucklimit mindestens 5bar, mindestens 6bar, mindestens 7bar oder mindestens 8bar beträgt.

4. Betriebsverfahren nach einem der vorhergehenden Ansprüche, wobei sich das Zeitlimit bis zu dem Zeitpunkt erstreckt, wenn der Systemdruck, zwischen dem zweiten Ventil (V2) und dem Druckluftsystem (300), auf zumindest 6bar, zumindest 7bar oder zumindest 8bar sinkt.

5. Betriebsverfahren nach einem der vorhergehenden Ansprüche, wobei das zweite Ventil (V2) aus der Leerlaufphase heraus von einem gesperrten Zustand ("0") in einen geöffneten Zustand ("1") geschaltet wird und wieder in einen gesperrten Zustand ("0") geschaltet wird, wenn das vordefinierte Zeitlimit verstrichen ist und/oder der Systemdruck unter das vordefinierte Drucklimit sinkt.

6. Betriebsverfahren nach einem der vorhergehenden Ansprüche, wobei die Luft aus dem Druckluftsystem (300) über eine Verbindungsleitung (VL) in einen Leitungsabschnitt der Druckluftaufbereitungseinrichtung (100) zwischen dem vierten Ventil (V4) und einer Luft-Aufbereitungs- oder Luft-Trocknungseinrichtung (T) geführt wird und über die Luft-Aufbereitungs- oder Luft-Trocknungseinrichtung (T) zurück zur Fördereinrichtung (FE).

7. Betriebsverfahren nach Anspruch 6, wobei die Verbindungsleitung (VL) ein Drosselventil (V5) aufweist.

8. Betriebsverfahren nach einem der vorhergehenden Ansprüche, wobei das zweite Ventil (V2) aus der Leerlaufphase heraus von einem gesperrten Zustand ("0") in einen geöffneten Zustand ("1") geschaltet wird und wieder in einen gesperrten Zustand ("0") geschaltet wird, wenn ein Druckanstieg zwischen dem zweiten Ventil (V2) und dem Druckluftsystem (300) erfasst wird.

9. Betriebsverfahren nach einem der vorhergehenden Ansprüche, wobei
das erste Ventil (V1) ein elektrisch schaltbares Schaltventil ist, vorzugsweise ein Magnetventil,
das zweite Ventil (V2) ein elektrisch schaltbares Schaltventil ist, vorzugsweise ein Magnetventil, und/oder
das vierte Ventil (V4) ein Rückschlagventil ist.

10. Betriebsverfahren nach einem der vorhergehenden Ansprüche, wobei Luft aus dem Druckluftsystem (300) über das erste Ventil (V1) auf das dritte Ventil (V3) wirkt, wenn das erste Ventil (V1) geöffnet (1") ist, um das dritte Ventil (V3) zu schalten.

11. Betriebsverfahren nach einem der vorhergehenden Ansprüche, wobei Luft aus dem Druckluftsystem (300) über das zweite Ventil (V2) auf das dritte Ventil (V3) wirkt, wenn das zweite Ventil (V2) geöffnet (1") ist, um das dritte Ventil (V3) zu schalten.

12. Betriebsverfahren nach einem der vorhergehenden Ansprüche, wobei das dritte Ventil (V3) ein Luft-Ablassventil zum wahlweisen Sperren oder Ausgeben von Luft aus der Fördereinrichtung (FE) ist und/oder druckluftschaltbar ist, insbesondere über Luft aus dem Druckluftsystem (300).

13. Betriebsverfahren nach einem der vorhergehenden Ansprüche, wobei das vierte Ventil (V4) eine Durchfuhr von Luft aus der Fördereinrichtung (FE) zu dem Druckluftsystem (300) erlaubt und eine Durchfuhr von Luft aus dem Druckluftsystem (300) zu der Fördereinrichtung (FE) verhindert.

14. Betriebsverfahren nach einem der vorhergehenden Ansprüche, wobei die Druckluftaufbereitungseinrichtung (100) einen Drucksensor (S) zur Erfassung des Systemdrucks zwischen dem zweiten Ventil (V2) und dem Druckluftsystem (300) aufweist und/oder das zweite Ventil (V2) in Abhängigkeit der mittels des Drucksensors (S) erfassten Werte geschaltet wird.

## Claims

1. Operating method for a compressed-air preparation device (100), preferably an electronic compressed-air preparation device, for connection, on the one hand, to an air compressor device (200), which can be switched automatically into an idling state by means of compressed air from the compressed-air preparation device (100), and, on the other hand, to a compressed-air system (300), wherein the compressed-air preparation device (100) has a delivery device (FE) that can be connected to the air compressor device (200), a first valve (V1), a second valve (V2), a third valve (V3) and a fourth valve (V4), wherein, moving from an idling phase towards a delivery phase, the first valve (V1) and the third valve (V3) are switched to a blocked state ("0") and the second valve (V2) is switched to an open state ("1"), with the result that air from the compressed-air system (300) is passed back to the delivery device (FE) via the second valve (V2) while bypassing the fourth valve (V4), wherein the second valve (V2) is switched to a blocked state ("0") when a predefined time limit has passed and/or a system pressure between the second valve (V2) and the compressed-air system (300) falls below a predefined pressure limit.

2. Operating method according to Claim 1, wherein the time limit is no more than 10, no more than 15, no more than 20, no more than 25 or no more than 30 seconds.

3. Operating method according to Claim 1 or 2, wherein the pressure limit is at least 5 bar, at least 6 bar, at least 7 bar or at least 8 bar.

4. Operating method according to one of the preceding claims, wherein the time limit extends up to the time when the system pressure between the second valve (V2) and the compressed-air system (300) falls to at least 6 bar, at least 7 bar or at least 8 bar.

5. Operating method according to one of the preceding claims, wherein, starting from the idling phase, the second valve (V2) is switched from a blocked state ("0") to an open state ("1") and back to a blocked state ("0") when the predefined time limit has passed and/or the system pressure falls below the predefined pressure limit.

6. Operating method according to one of the preceding claims, wherein the air from the compressed-air system (300) is passed via a connecting line (VL) into a line segment of the compressed-air preparation device (100) between the fourth valve (V4) and an air preparation or air drying device (T) and, via the air preparation or air drying device (T), back to the delivery device (FE).

7. Operating method according to Claim 6, wherein the connecting line (VL) has an orifice valve (V5).

8. Operating method according to one of the preceding claims, wherein, starting from the idling phase, the second valve (V2) is switched from a blocked state ("0") to an open state ("1") and back into a blocked state ("0") when a pressure rise is detected between the second valve (V2) and the compressed-air system (300) .

9. Operating method according to one of the preceding claims, wherein
the first valve (V1) is an electrically switchable switching valve, preferably a solenoid valve,
the second valve (V2) is an electrically switchable switching valve, preferably a solenoid valve, and/or the fourth valve (V4) is a nonreturn valve.

10. Operating method according to one of the preceding claims, wherein air from the compressed-air system (300) acts via the first valve (V1) on the third valve (V3) when the first valve (V1) is open ("1") in order to switch the third valve (V3).

11. Operating method according to one of the preceding claims, wherein air from the compressed-air system (300) acts via the second valve (V2) on the third valve (V3) when the second valve (V2) is open ("1") in order to switch the third valve (V3).

12. Operating method according to one of the preceding claims, wherein the third valve (V3) is an air discharge valve for selectively blocking or discharging air from the delivery device (FE) and/or can be switched by compressed air, in particular by means of air from the compressed-air system (300).

13. Operating method according to one of the preceding claims, wherein the fourth valve (V4) allows air to be passed through from the delivery device (FE) to the compressed-air system (300) and prevents air from being passed from the compressed-air system (300) to the delivery device (FE).

14. Operating method according to one of the preceding claims, wherein the compressed-air preparation device (100) has a pressure sensor (S) for detecting the system pressure between the second valve (V2) and the compressed-air system (300), and/or the second valve (V2) is switched in accordance with the values detected by means of the pressure sensor (S).

## Revendications

1. Procédé de fonctionnement pour un dispositif de préparation d'air comprimé (100), de préférence électronique, destiné à être relié d'un côté à un dispositif compresseur d'air (200), qui peut être commuté automatiquement dans un état de fonctionnement à vide au moyen d'air comprimé en provenance du dispositif de préparation d'air comprimé (100), et d'un autre côté à un système d'air comprimé (300), le dispositif de préparation d'air comprimé (100) possédant un dispositif de refoulement (FE) qui peut être relié au dispositif compresseur d'air (200), une première vanne (V1), une deuxième vanne (V2), une troisième vanne (V3) et une quatrième vanne (V4), d'une phase de fonctionnement à vide à une phase de refoulement, la première vanne (V1) et la troisième vanne (V3) étant commutées dans un état fermé (« 0 ») et la deuxième vanne (V2) étant commutée dans un état ouvert (« 1 »), de sorte que l'air en provenant du système d'air comprimé (300) passe par la deuxième vanne (V2) et soit ramené dans le dispositif de refoulement (FE) en contournant la quatrième vanne (V4), la deuxième vanne (V2) étant commutée dans un état fermé (« 0 ») lorsqu'une limite de temps prédéfinie est dépassée et/ou lorsqu'une pression de système entre la deuxième vanne (V2) et le système d'air comprimé (300) chute au-dessous d'une limite de pression prédéfinie.

2. Procédé de fonctionnement selon la revendication 1, la limite de temps étant au maximum de 10, au maximum de 15, au maximum de 20, au maximum de 25 ou au maximum de 30 secondes.

3. Procédé de fonctionnement selon la revendication 1 ou 2, la limite de pression étant d'au moins 5 bars, d'au moins 6 bars, d'au moins 7 bars ou d'au moins 8 bars.

4. Procédé de fonctionnement selon l'une des revendications précédentes, la limite de temps s'étendant jusqu'à un instant auquel la pression de système entre la deuxième vanne (V2) et le système d'air comprimé (300) chute à au moins 6 bars, à au moins 7 bars ou à au moins 8 bars.

5. Procédé de fonctionnement selon l'une des revendications précédentes, la deuxième vanne (V2), en sortie de la phase de fonctionnement à vide, étant commutée d'un état fermé (« 0 ») en un état ouvert (« 1 ») et de nouveau dans un état fermé (« 0 ») lorsque la limite de temps prédéfinie est dépassée et/ou la pression de système chute au-dessous de la limite de pression prédéfinie.

6. Procédé de fonctionnement selon l'une des revendications précédentes, l'air en provenance du système d'air comprimé (300) étant acheminé par le biais d'une conduite de liaison (VL) dans une portion de conduite du dispositif de préparation d'air comprimé (100) entre la quatrième vanne (V4) et un dispositif de préparation d'air ou de séchage d'air (T) puis renvoyé vers le dispositif de refoulement (FE) par le biais du dispositif de préparation d'air ou de séchage d'air (T).

7. Procédé de fonctionnement selon la revendication 6, la conduite de liaison (VL) possédant une valve d'étranglement (V5).

8. Procédé de fonctionnement selon l'une des revendications précédentes, la deuxième vanne (V2), en sortie de la phase de fonctionnement à vide, étant commutée d'un état fermé (« 0 ») en un état ouvert (« 1 ») et de nouveau dans un état fermé (« 0 ») lorsqu'une augmentation de pression est détectée entre la deuxième vanne (V2) et le système d'air comprimé (300).

9. Procédé de fonctionnement selon l'une des revendications précédentes, selon lequel
la première vanne (V1) est une vanne de commutation pouvant être commutée électriquement, de préférence une électrovanne,
la deuxième vanne (V2) est une vanne de commutation pouvant être commutée électriquement, de préférence une électrovanne et/ou
la quatrième vanne (V4) est un clapet anti-retour.

10. Procédé de fonctionnement selon l'une des revendications précédentes, l'air en provenance du système d'air comprimé (300) agissant sur la troisième vanne (V3) par le biais de la première vanne (V1) lorsque la première vanne (V1) est ouverte (1") afin de commuter la troisième vanne (V3).

11. Procédé de fonctionnement selon l'une des revendications précédentes, l'air en provenance du système d'air comprimé (300) agissant sur la troisième vanne (V3) par le biais de la deuxième vanne (V2) lorsque la deuxième vanne (V2) est ouverte (1") afin de commuter la troisième vanne (V3).

12. Procédé de fonctionnement selon l'une des revendications précédentes, la troisième vanne (V3) étant une vanne d'évacuation d'air servant à bloquer ou à délivrer sélectivement de l'air depuis le dispositif de refoulement (FE) et/ou pouvant être commutée en pression, notamment par le biais de l'air en provenance du système d'air comprimé (300).

13. Procédé de fonctionnement selon l'une des revendications précédentes, la quatrième vanne (V4) autorisant un passage d'air du dispositif de refoulement (FE) vers le système d'air comprimé (300) et empêchant un passage d'air du système d'air comprimé (300) vers le dispositif de refoulement (FE).

14. Procédé de fonctionnement selon l'une des revendications précédentes, le dispositif de préparation d'air comprimé (100) possédant un capteur de pression (S) destiné à détecter la pression de système entre la deuxième vanne (V2) et le système d'air comprimé (300) et/ou la deuxième vanne (V2) étant commutée en fonction des valeurs détectées au moyen du capteur de pression (S) .
